# DEMANDE DE BREVET EUROPEEN

(11) **EP 2 557 405 A1**
(43) Date de publication de la demande: **13.02.2013**
(21) Numéro de dépôt: 12179439.0
(22) Date de dépôt: 06.08.2012
(51) Int. Cl.: G01L 7/08, G01L 19/06, G01L 9/00

(54) **Dispositif pour la mesure de la pression dans un contenant**

(30) Priorité: 09.08.2011 FR 1157266
(71) Demandeur: Schrader S.A.S., 25300 Pontarlier (FR)
(72) Inventeur: Gresset, Benoit, 25000 BESANCON (FR); Da Silva, Christophe, 25000 BESANCON (FR)
(74) Mandataire: Novagraaf Technologies

(57) **Abrégé**

Dispositif (1) pour la mesure de la pression dans un contenant (2) soumis à un environnement interne sévère, du type constitué par un capteur de pression interne (3) dont une partie active est dirigée vers l'intérieur du contenant (2) et isolée de son environnement (7) par l'intermédiaire de moyens de protection compatibles avec ce dernier, caractérisé en ce que les moyens de protection de la partie active du capteur (3) sont constitués par un capot (10) étanche en élastomère, définissant une enceinte (11) dont une partie inférieure forme une membrane (14) élastique et souple, initialement bombée, en contact de l'environnement (7), ladite enceinte (11) étant remplie d'un liquide incompressible (15) interposé entre ladite membrane (14) du capot (10) et le support (5) du capteur (3).

## Description

### Domaine technique

La présente invention concerne un dispositif pour la mesure de la pression dans un contenant soumis à un environnement interne sévère, c'est-à-dire: corrosif, humide, encrassant ... etc.

Ce dispositif est, par exemple, destiné à la mesure de pression à l'intérieur d'un pneumatique, pour rendre cette mesure insensible à l'encrassement lié à l'utilisation de liquide anti-crevaison.

### Etat de la technique

De manière connue, un tel dispositif est constitué par un capteur de pression interne relié extérieurement à un circuit électronique de traitement du signal et fixé sur un support, destiné à coopérer avec une ouverture du contenant, une partie active du capteur étant dirigée vers l'intérieur du contenant et isolée de son environnement par l'intermédiaire de moyens de protection compatibles avec ce dernier.

Habituellement, ces capteurs sont en céramique dits à couche épaisse ou métallique dits à couche mince dont la partie sensible de mesure de pression doit être isolée de l'environnement et compatible avec celui-ci.

Ces capteurs sont onéreux comparativement aux capteurs adaptés à la mesure de la pression d'air d'un pneumatique par exemple.

Des capteurs moins chers existent sur le marché dont la partie active de mesure de la pression est en silicium et verre par exemple. Cette partie active est fixée sur un support ou directement sur un circuit imprimé en verre-epoxy, bakélite, céramique, etc., et les connexions électriques avec le circuit imprimé sont réalisées par micro-câblage en fils d'or.

Il est connu ensuite de recouvrir la partie active du capteur et les interconnexions d'un gel de protection, un conditionnement adapté du signal électrique mesuré et une calibration sont ensuite nécessaires pour exploiter ces capteurs.

Mais le gel transmet mal la pression et se dégrade rapidement dans un environnement soumis à de fortes variations de températures, agressif et générateur d'encrassement.

Est également connu dans l'art antérieur un dispositif de mesure de la pression, décrit dans la demande internationale WO 00/45143, comprenant une membrane flexible destinée à emprisonner un liquide vecteur de pression dans une enceinte dans laquelle se trouve également un capteur. Une telle membrane est réalisée dans un matériau rigide tel que le polyéthersulfone, voire métallique, de faible épaisseur pour conserver une certaine flexibilité.

Dans de telles conditions, un remplissage excessif de liquide ou la présence d'air par manque de remplissage, aura pour effet de provoquer une déformation de la membrane, ce qui induira une pression ou une dépression parasite sur le liquide d'où sur le capteur, faussant ainsi la mesure.

### Description de l'invention

Le but de la présente invention est de remédier à cet inconvénient et concerne un dispositif pour la mesure de la pression dans un contenant soumis à un environnement interne sévère, du type constitué par un capteur de pression interne relié extérieurement à un circuit électronique de traitement du signal et fixé sur un support, destiné à coopérer avec une ouverture du contenant, une partie active du capteur étant dirigée vers l'intérieur du contenant et isolée de son environnement par l'intermédiaire de moyens de protection compatibles avec ce dernier. Ces moyens de protection de la partie active du capteur sont constitués par un capot étanche en élastomère, définissant une enceinte dont une partie supérieure ouverte coopère hermétiquement avec la face interne du support du capteur et dont une partie inférieure forme une membrane élastique et souple, initialement bombée, disposée hermétiquement dans l'ouverture du contenant au contact avec son environnement interne, ladite enceinte étant remplie d'un liquide incompressible interposée entre ladite membrane du capot et le support du capteur. De cette manière, la partie initialement bombée de la membrane peut être repoussée pendant le remplissage de l'enceinte par le liquide, jusqu'à fermeture hermétique de celle-ci et ainsi assurer la neutralité de la membrane sur la mesure de pression dans le contenant.

La présente invention concerne également les caractéristiques qui ressortiront au cours de la description qui va suivre et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :

### Brève description des figures

- la figure 1 est une vue en perspective d'un dispositif de mesure de pression selon l'invention avant montage sur le contenant schématisé,
- les figures 2 et 3 sont des vues en coupe axiales du dispositif selon la figure 1 respectivement en cours de montage et après montage définitif dans l'ouverture du contenant schématisé.

### Description détaillée

Le dispositif 1 globalement désigné sur les figures est destiné à mesurer la pression dans un contenant 2.

Le dispositif 1 comprend un capteur de pression interne 3 relié extérieurement à un circuit électronique de traitement du signal 4 et fixé sur un support 5, destiné à coopérer avec une ouverture 6 du contenant 2, une partie active du capteur 3 étant dirigée vers l'intérieur du contenant 2 et isolée de son environnement 7 par l'intermédiaire de moyens de protection compatibles avec ce dernier.

Les connexions électriques 8, 9, au moins au nombre de deux, permettent de remonter l'information de mesure à un dispositif de traitement du signal.

Selon l'invention, les moyens de protection de la partie active du capteur 3 sont constitués par un capot 10 étanche en élastomère, définissant une enceinte 11 dont une partie supérieure ouverte 12 coopère hermétiquement avec la face interne 13 du support 5 du capteur 3 et dont une partie inférieure forme une membrane 14 élastique et souple, initialement bombée, disposée hermétiquement dans l'ouverture 6 du contenant 2 au contact avec son environnement interne 7. Ladite enceinte 11 est remplie d'un liquide incompressible 15 interposé entre ladite membrane 14 du capot 10 et le support 5 du capteur 3. De cette manière, la partie initialement bombée de la membrane 14 peut être repoussée pendant le remplissage de l'enceinte 11 par le liquide 15, jusqu'à fermeture hermétique de celle-ci et ainsi assurer la neutralité de la membrane 14 sur la mesure de pression dans le contenant 2.

Le capot en élastomère 10 est fixé et maintenu en place par rapport à l'ouverture 6 du contenant 2 par un épaulement périphérique inférieur 16 de sa paroi externe 17, venant en appui par compression sur le pourtour 6a de l'ouverture 6. Ainsi la compression de l'élastomère est calibrée.

Selon la présente réalisation, le capot 10 et son support 5 intégrant le capteur 3 sont sertis dans une bague 18, elle-même maintenue en place contre le pourtour 6a de l'ouverture 6 du contenant 2 par des moyens de compression exerçant une force axiale F sur la bague 18 et conséquemment sur la paroi externe 17 du capot 10 en élastomère, de manière à assurer l'étanchéité entre ledit capot 10 et le contenant 2.

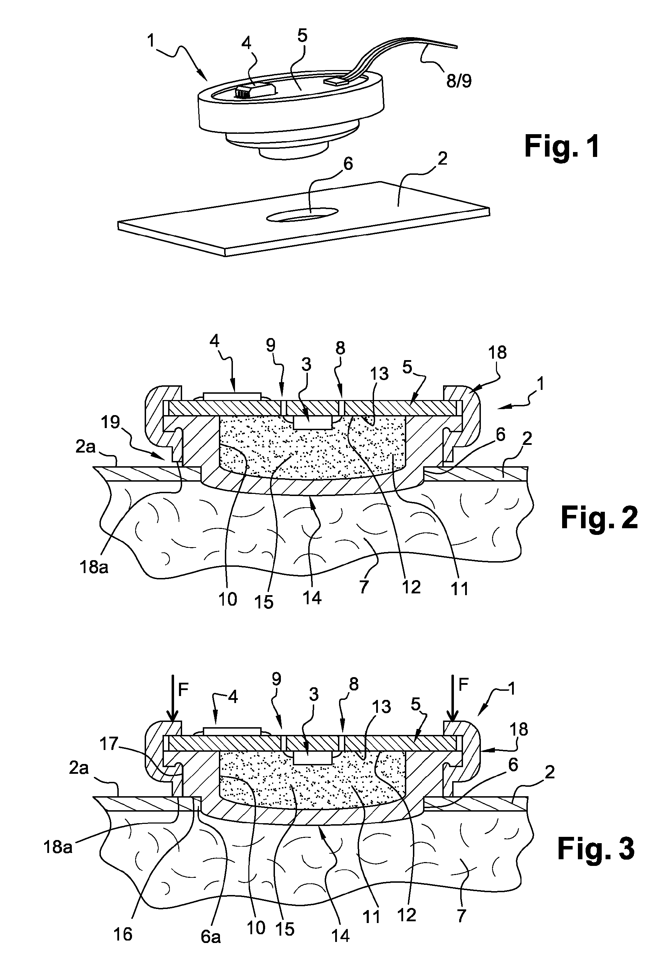

En comparant les figures 2 et 3, on voit bien dans la zone 19 le jeu subsistant entre l'extrémité inférieure 18a de la bague 18 et la face supérieure 2a du contenant 2 avant montage définitif (figure 2), puis la disposition de ce jeu résultant de la compression de la bague selon la force axiale F exercée sur celle-ci et conséquemment sur le capot 10 (figure 3).

Selon une autre caractéristique essentielle de l'invention, le liquide de transmission 15 de la pression contenue dans le capot 10 est compatible au moins avec le capot 10, la partie active du capteur 3 qu'il baigne et le domaine de température. Ce liquide 10 peut être par exemple de l'eau si les températures environnementales le permettent, ou encore de la glycérine.

Préférentiellement, le liquide sera compatible également avec l'environnement dont la pression est à mesurer.

## Revendications

1. Dispositif (1) pour la mesure de la pression dans un contenant (2) soumis à un environnement interne sévère, du type constitué par un capteur de pression interne (3) relié extérieurement à un circuit électronique de traitement du signal (4) et fixé sur un support (5), destiné à coopérer avec une ouverture (6) du contenant (2), une partie active du capteur (3) étant dirigée vers l'intérieur du contenant (2) et isolée de son environnement (7) par l'intermédiaire de moyens de protection compatibles avec ce dernier, **caractérisé en ce que** les moyens de protection de la partie active du capteur (3) sont constitués par un capot (10) étanche en élastomère, définissant une enceinte (11) dont une partie supérieure ouverte (12) coopère hermétiquement avec la face interne (13) du support (5) du capteur (3) et dont une partie inférieure forme une membrane (14) élastique et souple, initialement bombée, disposée hermétiquement dans l'ouverture (6) du contenant (2) au contact avec son environnement interne (7), ladite enceinte (11) étant remplie d'un liquide incompressible (15) interposé entre ladite membrane (14) du capot (10) et le support (5) du capteur (3), de manière à ce que la partie initialement bombée de la membrane (14) puisse être repoussée pendant le remplissage de l'enceinte (11) par le liquide (15), jusqu'à fermeture hermétique de celle-ci et ainsi assurer la neutralité de la membrane (14) sur la mesure de pression dans le contenant (2).

2. Dispositif selon la revendication 1 **caractérisé en ce que** le capot en élastomère (10) est fixé et maintenu en place par rapport à l'ouverture (6) du contenant (2) par un épaulement périphérique inférieur (16) de sa paroi externe (17), venant en appui par compression sur le pourtour (6a) de l'ouverture (6).

3. Dispositif selon la revendication 1 ou 2, **caractérisé en ce que** le capot (10) et son support (5) intégrant le capteur (3) sont sertis dans une bague (18), elle-même maintenue en place contre le pourtour (6a) de l'ouverture (6) du contenant (2) par des moyens de compression exerçant une force axiale (F) sur la bague (18) et conséquemment sur la paroi externe (17) du capot (10) en élastomère, de manière à assurer l'étanchéité entre ledit capot (10) et le contenant (2).

4. Dispositif selon les revendications 1 à 3, **caractérisé en ce que** le liquide de transmission (15) de la pression contenue dans le capot (10) est compatible au moins avec le capot (10), la partie active du capteur (3) qu'il baigne et le domaine de température.
